# EUROPEAN PATENT APPLICATION

(11) **EP 4 817 945 A2**
(43) Date of publication of application: **07.10.2026**
(21) Application number: 26164689.7
(22) Date of filing: 13.03.2026
(51) Int. Cl.: B60L 58/10, B60L 3/12, B60L 15/20, G07C 5/00, H01M 10/48

(54) **BATTERY CONTROL SYSTEM**

(30) Priority: 31.03.2025 JP 2025059445
(71) Applicant: Toyota Jidosha Kabushiki Kaisha, Toyota-shi, Aichi-ken 471-8571 (JP)
(72) Inventor: MATSUOKA, Shohei, Toyota-shi, 471-8571 (JP)
(74) Representative: J A Kemp LLP

(57) **Abstract**

A battery control system acquires target traveling data that is traveling data of a battery electric vehicle, and reference traveling data that is traveling data related to a plurality of vehicles. The battery control system compares the target traveling data with the reference traveling data, and executes setting change processing of changing a setting related to a battery when a predetermined condition is satisfied.

## Description

### BACKGROUND OF THE INVENTION

### 1. Field of the Invention

The present disclosure relates to a battery control system applied to a battery mounted in a battery electric vehicle.

### 2. Description of Related Art

Japanese Unexamined Patent Application Publication No. 2020-158003 (JP 2020-158003 A) discloses a setting inheritance system that sets equipment of a vehicle to a setting suitable for a user based on user information of the vehicle.

### SUMMARY OF THE INVENTION

JP 2020-158003 A discloses a technique for changing a setting of a steering wheel, a seat position, a mirror position, an audio device volume, or the like in accordance with a user's preference. However, a viewpoint of changing a driving characteristic by changing a setting of a battery by using traveling data related to a plurality of vehicles is not described.

One object of the present disclosure is to provide a technique for automatically changing a setting related to a battery of a battery electric vehicle.

A first viewpoint relates to a battery control system applied to a battery mounted in a battery electric vehicle. The battery control system includes one or more processors, and one or more storage devices. The one or more storage devices are configured to store reference traveling data that is traveling data related to a plurality of vehicles. The one or more processors are configured to acquire target traveling data that is traveling data of the battery electric vehicle, and the reference traveling data. The one or more processors are configured to compare the target traveling data with the reference traveling data, and execute setting change processing of changing a setting related to the battery when a predetermined condition is satisfied.

The setting change processing according to the present disclosure changes the setting related to the battery based on a comparison between the target traveling data and the reference traveling data. As a result, the battery control system can flexibly change the setting of the battery of the battery electric vehicle in accordance with how the battery electric vehicle is used. As a result, a driving characteristic suitable for a target battery electric vehicle is realized.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing an outline of a battery control system according to an embodiment;
FIG. 2 is a graph conceptually showing a comparison between target traveling data and reference traveling data;
FIG. 3 is a flowchart showing an outline of a series of processing related to setting change processing;
FIG. 4 is a flowchart showing the series of processing related to the setting change processing in detail;
FIG. 5 is a diagram showing an outline of application to another vehicle; and
FIG. 6 is a block diagram showing a configuration example of the battery control system.

### DETAILED DESCRIPTION OF EMBODIMENTS

An embodiment of the present disclosure will be described referring to accompanying drawings.

### 1. Outline of Battery Control System

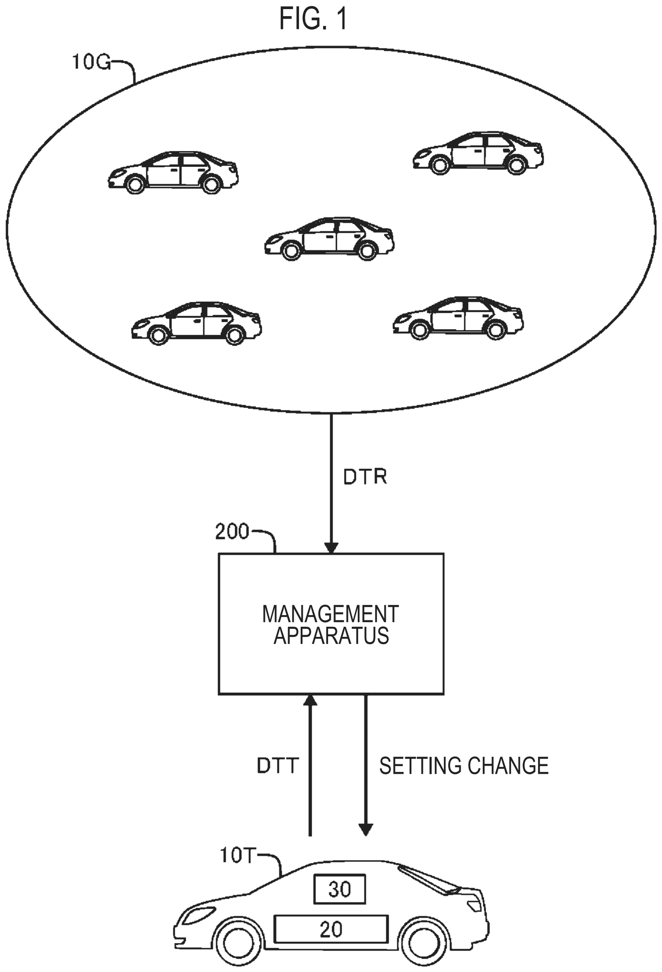

FIG. 1 is a diagram showing an outline of a battery control system 1 according to the embodiment. The battery control system 1 is applied to a battery 20 mounted in a target vehicle 10T. The target vehicle 10T is a battery electric vehicle in which an electric motor is used as a power device for traveling. The battery 20 is a power supply that supplies a current for rotating the electric motor.

A management apparatus 200 acquires traveling data from a vehicle group 10G. The vehicle group 10G includes a plurality of vehicles (typically, battery electric vehicles), and may include the target vehicle 10T. The management apparatus 200 manages the acquired traveling data as reference traveling data DTR. The management apparatus 200 acquires target traveling data DTT that is traveling data related to the target vehicle 10T. The management apparatus 200 compares the reference traveling data DTR with the target traveling data DTT, and executes "setting change processing" when a predetermined condition is satisfied. The setting change processing is processing of changing a setting related to the battery 20 of the target vehicle 10T. For example, the management apparatus 200 transmits a command to change the setting of the battery 20 to the target vehicle 10T in the setting change processing.

The traveling data is information related to a traveling history of the target vehicle 10T or the vehicle group 10G. The traveling data includes, for example, an operating time of the battery electric vehicle, a vehicle speed, a traveling distance, a history of an accelerator operation amount, and the like. The target traveling data DTT is acquired by a sensor group 30 provided in the target vehicle 10T. The operating time of the battery electric vehicle refers to a duration of a state in which the power supply of the battery electric vehicle is turned on and power is ready to be supplied from the battery 20 to the electric motor.

The sensor group 30 includes a recognition sensor, a vehicle state sensor, a positioning sensor, and a position sensor. The recognition sensor recognizes (detects) a surrounding condition of the target vehicle 10T. Examples of the recognition sensor include a camera, light detection and ranging (LIDAR), and radar. The vehicle state sensor detects a state of the target vehicle 10T. For example, the vehicle state sensor includes a speed sensor, an acceleration sensor, a yaw rate sensor, a steering angle sensor, a wheel speed sensor, and a rotation speed sensor. The acceleration sensor detects lateral acceleration and longitudinal acceleration of the target vehicle 10T. The wheel speed sensor detects a rotation speed of wheels of the target vehicle 10T. The rotation speed sensor detects a rotation speed of the electric motor. The positioning sensor detects a position and an azimuth of the target vehicle 10T. For example, the positioning sensor includes a global navigation satellite system (GNSS).

The position sensor detects a position and an angle of a component of the target vehicle 10T. For example, the position sensor includes an engine rotation speed sensor, a braking force sensor, and an electric power steering (EPS) torque sensor. While a driver is performing manual driving, it is possible to acquire information regarding presence or absence of a driving operation by the driver and an operation amount of the driving operation based on a change in the accelerator operation amount, an engine rotation speed, a braking force, an EPS torque, and the like. As another example, the position sensor may include a steering sensor that detects a steering amount of a steering wheel, an accelerator position sensor (accelerator operation amount sensor) that detects a stroke amount of an accelerator pedal, and a brake position sensor (brake pedal sensor) that detects a stroke amount of a brake pedal.

The reference traveling data DTR is acquired by a sensor attached to each vehicle in the vehicle group 10G, as in the target traveling data DTT.

### 2. Setting Change Processing

### 2-1. Outline

As described above, the battery 20 supplies the current for rotating the electric motor. For example, when the accelerator pedal is operated to move the target vehicle 10T forward, the current for rotating the electric motor is supplied from the battery 20 to the electric motor. In this case, the current (discharge current) supplied from the battery 20 is correlated with the accelerator operation amount. That is, the greater the accelerator operation amount, the higher the discharge current, and as a result, the target vehicle 10T obtains a larger driving force. The magnitude of the discharge current is also related to the weight of the target vehicle 10T. The greater the vehicle weight, the more energy is also needed for acceleration, and the current tends to increase.

For a safety purpose of suppressing excessive acceleration and a purpose of suppressing deterioration of the battery 20 due to a high current, an upper limit value of the discharge current (hereinafter, referred to as a "discharge upper limit value") is set in the battery 20. The setting change processing in the battery control system 1 includes processing of changing the discharge upper limit value. When the target vehicle 10T is loaded with a large amount of packages, a total weight of the target vehicle 10T is great, and more energy, that is, a higher discharge current, is needed for start or acceleration. Therefore, it is appropriate to increase the discharge upper limit value within a range that does not cause a safety problem. Meanwhile, when the target vehicle 10T is intended to move a long distance, it is effective to reduce the discharge upper limit value. By reducing the discharge upper limit value, power consumption of the battery 20 can be reduced, and a cruising range of the target vehicle 10T can be further extended.

### 2-2. Specific Example

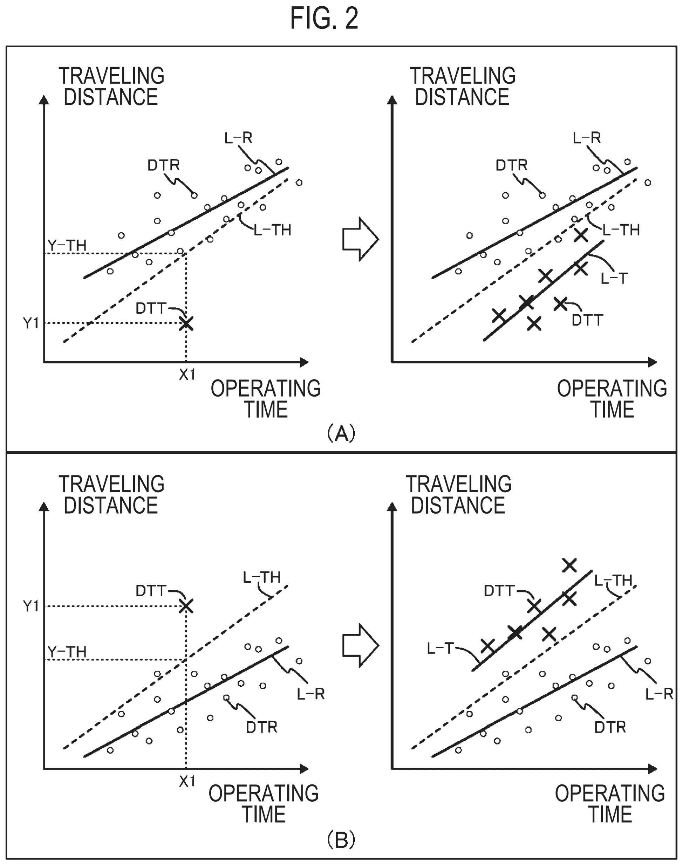

Some specific examples of the setting change processing will be described. The battery control system 1 executes the setting change processing when a result of comparing the target traveling data DTT with the reference traveling data DTR satisfies a predetermined condition. FIG. 2 is a graph conceptually showing a comparison between the target traveling data DTT and the reference traveling data DTR. A horizontal axis and a vertical axis of the graph represent a parameter included in the traveling data. Hereinafter, a condition in which the setting change processing is executed and a processing content corresponding to each condition will be described.

### Setting for Transport Application

When the battery control system 1 estimates that application of the target vehicle 10T is application of transporting a heavy object such as a package or a person, more specifically, when the battery control system 1 estimates that the total weight of the target vehicle 10T is greater than an average total weight of the vehicle group 10G, the battery control system 1 executes the setting change processing (upper limit release processing) of increasing the discharge upper limit value.

(A) in FIG. 2 shows a situation in which a setting for transport application is applied as the setting change processing. The horizontal axis of the graph represents an operating time of the vehicle, and the vertical axis of the graph represents a traveling distance. The operating time and the traveling distance are values accumulated over a predetermined period (for example, monthly). White circles in the graph are data (that is, the reference traveling data DTR) indicating a relationship between an operating time and a traveling distance which are related to the vehicle group 10G. The battery control system 1 obtains a relational expression between the operating time and the traveling distance for the vehicle group 10G from the reference traveling data DTR. The relational expression is shown as a reference regression line L-R in FIG. 2. The battery control system 1 further sets a threshold value based on the reference regression line L-R. The threshold value is indicated by a threshold line L-TH (dashed line) in FIG. 2. The threshold line L-TH is obtained by translating or rotating the reference regression line L-R. The battery control system 1 refers to an operating time and a traveling distance (that is, the target traveling data DTT) of the target vehicle 10T.

The battery control system 1 determines whether to execute the setting change processing based on a relationship between the target traveling data DTT and the threshold line L-TH. It is assumed that the operating time of the target vehicle 10T is X1 and a corresponding traveling distance is Y1. The traveling distance Y1 is smaller than a traveling distance Y-TH on the threshold line L-TH. This indicates that the traveling distance of the target vehicle 10T is significantly smaller than an average value of the vehicle group 10G. In this case, the battery control system 1 estimates that the total weight of the target vehicle 10T is greater than the average total weight of the vehicle group 10G. In response to the estimation, the battery control system 1 releases a restriction on the discharge current of the battery 20. That is, the battery control system 1 executes the setting change processing of increasing the discharge upper limit value of the battery 20. Since a short traveling distance is synonymous with a low average vehicle speed during the operating time, the vehicle speed may be used for the estimation instead of the traveling distance.

Estimation of the application of the target vehicle 10T may be executed based on a relationship between the accelerator operation amount and the discharge current. When the target vehicle 10T is used for the transport application, it can be said that the target vehicle 10T tends to repeatedly stop and start due to traffic congestion in an urban area, unloading at a delivery destination, or the like. The accelerator operation amount fluctuates significantly due to repeated stop and start. A change in the discharge current associated with the fluctuation is described as follows. When the target vehicle 10T starts from a stopped state, the discharge current rapidly increases in order to change a state of the target vehicle 10T from the stopped state to a traveling state. On the other hand, when the target vehicle 10T stops from the traveling state, the accelerator pedal is not operated, and the accelerator operation amount is zero. That is, it can be said that the target vehicle 10T used for transport exhibits a larger change in the discharge current with respect to increasing or decreasing of the accelerator operation amount than the vehicle group 10G. The battery control system 1 can estimate the application of the target vehicle 10T by comparing the discharge current of the target vehicle 10T with a threshold value determined based on the reference traveling data DTR.

In addition, estimation of the application of the target vehicle 10T may be executed based on a relationship between the accelerator operation amount and the vehicle speed. When the target vehicle 10T is used for the transport application, the total weight of the vehicle increases due to a load, and thus a vehicle speed for a certain accelerator operation amount tends to be smaller than that of the vehicle group 10G. Therefore, the battery control system 1 can estimate the application of the target vehicle 10T by setting the threshold value based on the relationship between the accelerator operation amount and the vehicle speed. A method of estimating the application based on the relationship between the accelerator operation amount and the vehicle speed can be considered as a method in which the horizontal axis of the graph in (A) of FIG. 2 is replaced with the accelerator operation amount and the vertical axis of the graph in (A) of FIG. 2 is replaced with the vehicle speed.

The application of the target vehicle 10T may be estimated based on a long-term tendency. For example, the battery control system 1 records the relationship between the operating time and the traveling distance on a monthly basis over a predetermined accumulation period (for example, one year) (right side of (A) in FIG. 2). As a result, the relational expression between the operating time and the traveling distance, such as a target regression line L-T, is obtained for the target traveling data DTT. By estimating the application based on the long-term tendency as described above, an influence of a short-term event is effectively eliminated. Whether there is a significant difference in a tendency between a data group of the target traveling data DTT and a data group of the reference traveling data DTR is statistically tested, and a method of testing whether there is the significant difference is not particularly limited.

### Setting for Long-Distance Application

When the battery control system 1 estimates that the traveling distance of the target vehicle 10T is greater than an average traveling distance of the vehicle group 10G, the battery control system 1 estimates that the target vehicle 10T is used for application of long-distance movement. In this case, the battery control system 1 executes the setting change processing (upper limit restriction processing) of reducing the upper limit value of the discharge current of the battery 20 mounted in the target vehicle 10T.

(B) in FIG. 2 shows a situation in which a setting for long-distance application is set as the setting change processing. Each axis and legends in the graph are the same as those in (A) of FIG. 2. In this case, the traveling distance Y1 corresponding to the operating time X1 of the target vehicle 10T is greater than the traveling distance Y-TH on the threshold line L-TH. This indicates that the traveling distance of the target vehicle 10T is significantly greater than the average value of the vehicle group 10G. In this case, the battery control system 1 estimates that the application of the target vehicle 10T is the long-distance application. In response to the estimation, the battery control system 1 limits the restriction on the discharge current of the battery 20. That is, the battery control system 1 executes the setting change processing of reducing the discharge upper limit value of the battery 20. Since a long traveling distance is synonymous with a high average vehicle speed during the operating time, the vehicle speed may be used for the estimation instead of the traveling distance. The long-distance application may also be estimated based on the long-term tendency as in the right part of (B) in FIG. 2.

The battery control system 1 may use an indicator indirectly indicating that the traveling distance is long in estimating the application. Examples of such an indicator include a state of charge of the battery 20 and a frequency of using fast charging. The state of charge and the frequency of the fast charging are included in the target traveling data DTT or the reference traveling data DTR.

The state of charge of the battery 20 refers to a proportion of a power storage amount occupied in a capacity of the battery 20. The state of charge is represented as 100% in a fully charged state and 0% in a state in which no power is stored. When it is estimated that the application is the long-distance application, the battery control system 1 refers to how long a predetermined state of charge has been maintained during the operating time of the vehicle. In a case of the application of the long-distance movement, a frequency of charging at a specific base (home, office, or the like) is reduced, and thus a time of traveling in a low charge state is likely to be long. Therefore, when a time during which the battery 20 of the target vehicle 10T is in the "low charge state" (for example, a time in which the state of charge is 40% or less is regarded as the low charge state) is significantly longer than that of the vehicle group 10G, the battery control system 1 estimates that the target vehicle 10T is used for the long-distance application. In this case, a threshold value related to a duration of the low charge state is set based on the reference traveling data DTR.

The frequency of using the fast charging is also used as an indicator for estimating the long-distance application. In a case of a vehicle (for example, a business vehicle traveling in an urban area) that returns to a base at regular intervals, the vehicle can be charged during parking at the base, and thus it can be said that necessity of the fast charging is not high. For example, when charging is possible at the base at night, a sufficient charging time can be secured, and thus the fast charging is not needed. Meanwhile, in a case of the long-distance application, even when the vehicle is fully charged at a time of departure, a situation in which charging is needed on the way to a destination is likely to occur. In such a case, it is considered that charging is often performed at a rest area or the like on a highway. From a viewpoint of movement efficiency, the fast charging is typically selected as a charging method in this case. Therefore, when the frequency of using the fast charging is significantly higher than that of the vehicle group 10G, the battery control system 1 estimates that the target vehicle 10T is used for the long-distance application. In this case, a threshold value related to the frequency of the fast charging is set based on the reference traveling data DTR.

As the setting change processing when the target vehicle 10T is estimated to be for the long-distance application, the battery control system 1 may change a range of the state of charge in which the fast charging is possible. In general, since the fast charging of the battery of the battery electric vehicle involves a high current, the battery is likely to be heated, and this is one of causes of deterioration of the battery. In order to suppress such deterioration and maintain the battery in a healthy state, it is effective to limit the range of the state of charge in which the fast charging is possible. For example, a setting is conceivable in which a battery that can be fast-charged in a range of 10% to 80% in normal application is fast-charged in a range of 30% to 100% in a case of the long-distance application. Such processing is referred to as a "fast charging restriction" hereinafter.

### 2-3. Effects

As described above, the setting change processing related to the battery control system 1 includes at least three types of processing. That is, the setting change processing includes the upper limit release processing when it is estimated that the vehicle group 10G is used for the transport application, and the upper limit restriction processing and the fast charging restriction which are executed when it is estimated that the vehicle group 10G is used for the long-distance application. The upper limit release processing enables the target vehicle 10T to accelerate strongly when the target vehicle 10T transports a package or a person in an urban area. The upper limit restriction processing contributes to reducing power consumption and extending the cruising range of the target vehicle 10T by suppressing an excessive discharge current. The fast charging restriction prolongs a service life of the battery 20 by suppressing the deterioration of the battery 20 due to the fast charging. In summary, the setting change processing is processing of estimating the application of the target vehicle 10T and appropriately changing the setting of the battery 20 in accordance with the application. As a result, a driving characteristic suitable for the target vehicle 10T is realized.

### 2-4. Processing Flow

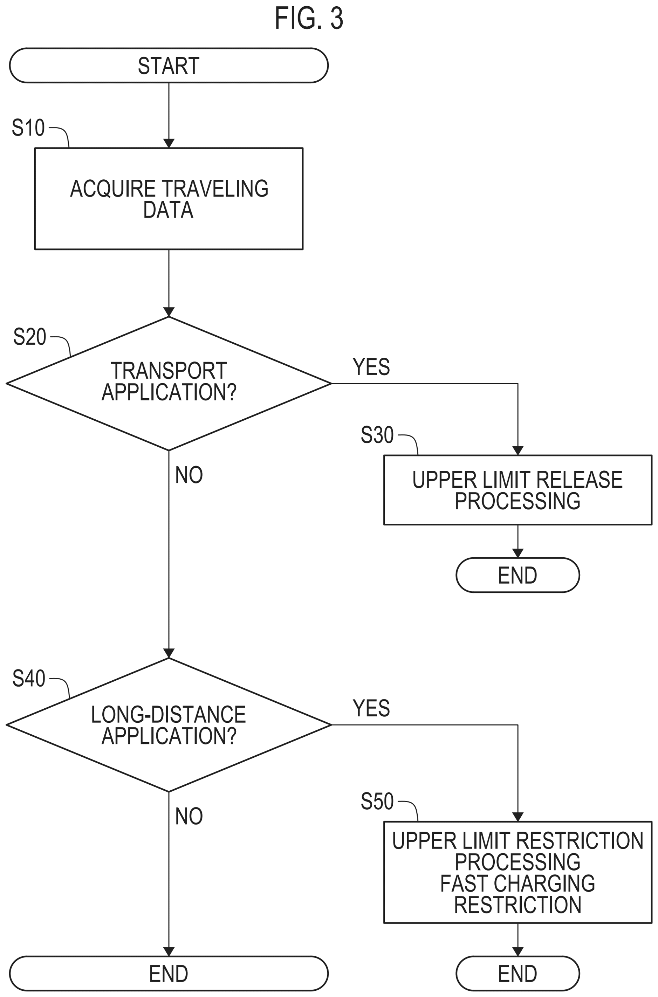

FIG. 3 is a flowchart showing an outline of a series of processing related to the setting change processing.

In step S10, the management apparatus 200 acquires the traveling data. The traveling data includes the target traveling data DTT (data related to the target vehicle 10T) and the reference traveling data DTR (data related to the vehicle group 10G).

In step S20, the management apparatus 200 estimates whether the target vehicle 10T is used for the transport application. As described above, the estimation is executed based on the traveling distance, the vehicle speed, the accelerator operation amount, and the like. In addition, the conditions may be used in combination. That is, the management apparatus 200 may regard the target vehicle 10T as used for the transport application when any one of the conditions is satisfied, or may regard the target vehicle 10T as used for the transport application when all of the conditions are satisfied. When the target vehicle 10T is estimated to be for the transport application (step S20; Yes), the processing progresses to step S30. When the target vehicle 10T is not estimated to be for the transport application (step S20; No), the processing progresses to step S40.

In step S30, the management apparatus 200 executes the upper limit release processing as the setting change processing. With the upper limit release processing, the upper limit value of the discharge current of the battery 20 mounted in the target vehicle 10T is increased. Specifically, the management apparatus 200 changes the setting of the battery 20 by transmitting an instruction to increase the upper limit value of the discharge current to the target vehicle 10T.

In step S40, the management apparatus 200 estimates whether the target vehicle 10T is used for the long-distance application. As described above, the estimation is executed based on the traveling distance, the state of charge, the frequency of the fast charging, and the like. In addition, the conditions may be used in combination. That is, the management apparatus 200 may regard the target vehicle 10T as used for the long-distance application when any one of the conditions is satisfied, or may regard the target vehicle 10T as used for the long-distance application when all of the conditions are satisfied. When the target vehicle 10T is estimated to be for the long-distance application (step S40; Yes), the processing progresses to step S50. When the target vehicle 10T is not estimated to be for the long-distance application (step S40; No), the setting change processing is not executed, and the series of processing ends.

In step S50, the management apparatus 200 executes the upper limit restriction processing as the setting change processing. That is, the management apparatus 200 reduces the upper limit value of the discharge current of the battery 20 mounted in the target vehicle 10T. As a result, the target vehicle 10T is suppressed from accelerating abruptly during operation of the accelerator pedal, and thus a range in which the target vehicle 10T can cruise is extended. In addition, the management apparatus 200 may execute the fast charging restriction for suppressing the deterioration of the battery 20 in addition to the upper limit restriction processing or instead of the upper limit restriction processing. Hereinafter, the upper limit restriction processing and the fast charging restriction are collectively referred to as "restriction setting processing".

The series of processing shown in FIG. 3 may be repeatedly executed at regular intervals. For example, by executing the processing once a month, it is possible to appropriately change the setting in conjunction with the traveling data accumulated each month. In addition, processing (upper limit release processing) related to steps S20 to S30 and processing (restriction setting processing) related to steps S40 to S50 do not need to be executed in an order shown in FIG. 3. The restriction setting processing may be executed before the upper limit release processing. Further, it is not always necessary to execute both the upper limit release processing and the restriction setting processing. Even when any one of the processing is executed, an effect of appropriately changing the setting of the battery 20 in accordance with the application of the target vehicle 10T is exhibited.

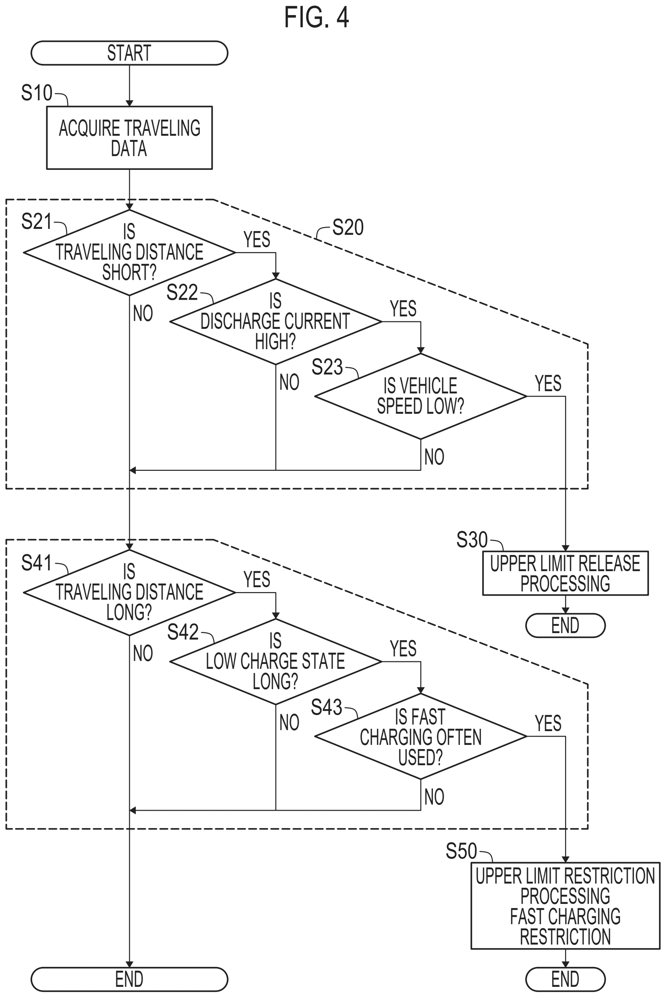

FIG. 4 is a flowchart showing the series of processing related to the setting change processing in more detail. FIG. 4 illustrates step S20 and step S40 of FIG. 3 in more detail.

Steps S21 to S23 represent conditions in which the setting for the transport application is set in detail. Step S21 indicates a condition based on the relationship between the operating time and the traveling distance. Step S22 indicates a condition based on the relationship between the accelerator operation amount and the discharge current. Step S23 indicates a condition based on the relationship between the accelerator operation amount and the vehicle speed. Steps S41 to S43 represent conditions in which the setting for the long-distance application is set in detail. Step S41 indicates a condition based on the relationship between the operating time and the traveling distance. Step S42 indicates a condition based on the duration of the low charge state. Step S43 indicates a condition based on the frequency of using the fast charging. Details of each condition are as described in section 2-2.

Processing related to the battery control system 1 does not need to include all of steps S21 to S23 and steps S41 to S43. In addition, an order of the steps is also not limited to an order shown in the drawing. In a case of FIG. 4, the setting change processing is executed when all of the shown conditions are satisfied, but it is not always necessary to satisfy all of the conditions in order to execute the setting change processing. For example, the upper limit release processing may be executed when one or two of the conditions in steps S21 to S23 are satisfied. Similarly, the restriction setting processing may be executed when one or two of the conditions in steps S41 to S43 are satisfied.

### 3. Selection of Vehicle Group

The vehicle group 10G serving as an acquisition source of the reference traveling data DTR can be optionally set. For example, as a specific example of the vehicle group 10G, vehicles used in the same region as the target vehicle 10T may be selected (first vehicle group 10G-1). Alternatively, as another example, vehicles of the same category as the target vehicle 10T may be selected (second vehicle group 10G-2). The vehicles of the same category as the target vehicle 10T refer to vehicles of the same model as the target vehicle 10T and vehicles included in the same classification (light automobiles, compact cars, sport utility vehicles (SUV), trucks, or the like). As described above, as the vehicle group 10G, by selecting vehicles including a common element with the target vehicle 10T, the reference traveling data DTR and the target traveling data DTT can be more appropriately compared.

### <Application of Setting to Another Vehicle>

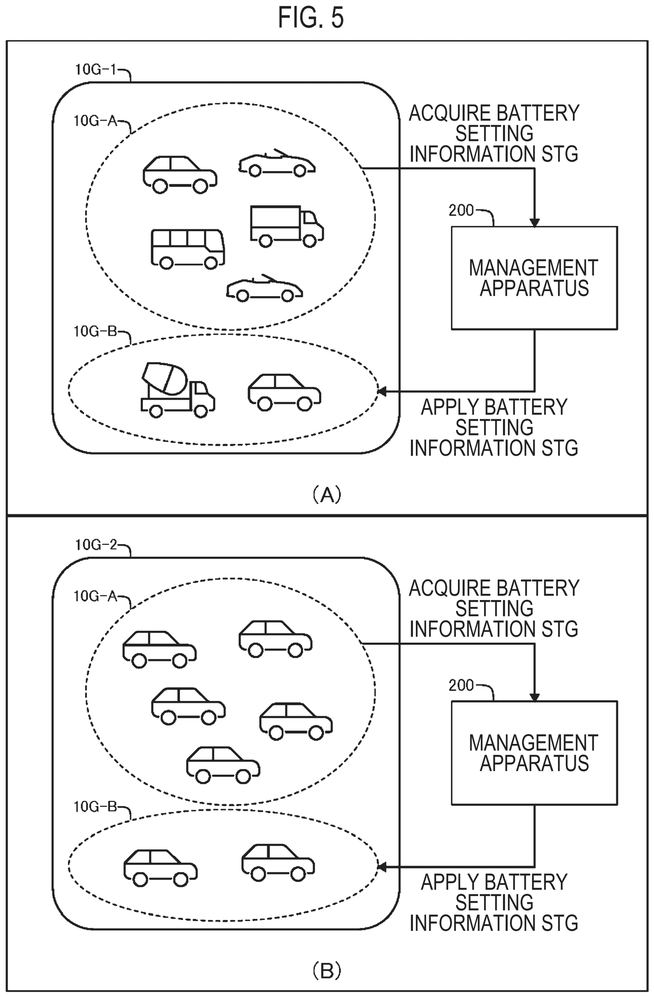

The management apparatus 200 may apply the setting of the battery 20 changed by the setting change processing to another vehicle other than the target vehicle 10T. The processing is referred to as "application to another vehicle". FIG. 5 is a diagram showing an outline of the application to another vehicle.

(A) in FIG. 5 shows the application to another vehicle relative to a group (first vehicle group 10G-1) including vehicles used in a certain region. The first vehicle group 10G-1 includes a changed vehicle group 10G-A including vehicles of which settings are changed (that is, specific application is estimated) by the setting change processing, and an unchanged vehicle group 10G-B including vehicles that have not yet undergone the setting change processing. As a time elapses, the setting change processing is performed on many vehicles, and thus the number of vehicles belonging to the changed vehicle group 10G-A increases and the number of vehicles belonging to the unchanged vehicle group 10G-B decreases. The management apparatus 200 executes the application to another vehicle when a predetermined condition is satisfied. That is, the management apparatus 200 acquires battery setting information STG of the changed vehicle group 10G-A and applies the battery setting information STG to the unchanged vehicle group 10G-B. The battery setting information STG is information including the setting (discharge upper limit value, fast-charge-allowable range) of the battery 20 corresponding to estimation of application of each vehicle. The management apparatus 200 typically executes the application to another vehicle when the proportion of the vehicles belonging to the changed vehicle group 10G-A occupied in the entire first vehicle group 10G-1 is equal to or higher than a threshold value (for example, a majority). In summary, the application to another vehicle is processing of applying the same battery setting as the changed vehicle group 10G-A to the unchanged vehicle group 10G-B by regarding application of the changed vehicle group 10G-A as typical vehicle application in a region of the changed vehicle group 10G-A. As a result, a setting corresponding to a traffic condition in each region is applied early. A unit of the region here can be optionally set, such as a city, a prefecture, a state, and a country, and is not particularly limited.

(B) in FIG. 5 shows the application to another vehicle relative to a group (second vehicle group 10G-2) including vehicles belonging to a certain category. A fundamental mechanism is the same as that of the first vehicle group 10G-1. As a result, a battery setting corresponding to each category is applied early.

In selecting the vehicle group 10G, viewpoints of the first vehicle group 10G-1 and the second vehicle group 10G-2 may be applied in combination. That is, vehicles belonging to a certain category used in a certain region may be selected as the vehicle group 10G. With such selection, it is possible to apply a battery setting corresponding to both the region and the category. For example, even when a certain vehicle model is mainly used for the long-distance application in country A but is often used for the transport application in country B, a battery setting suitable for each country can be applied.

### 4. Configuration Example

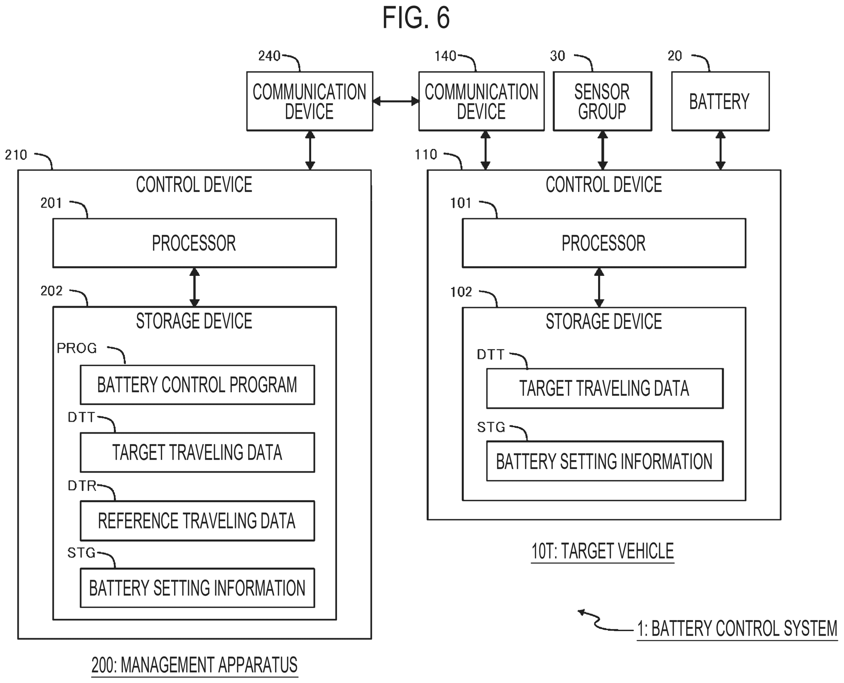

FIG. 6 is a block diagram showing a configuration example of the battery control system 1.

### 4-1. Target Vehicle

The target vehicle 10T includes a control device 110, the battery 20, the sensor group 30, and a communication device 140.

The battery 20 is a secondary battery capable of charging and discharging, for example, a lithium-ion secondary battery. The battery 20 supplies power to the electric motor. The electric motor drives the target vehicle 10T by using the power received from the battery 20. Examples of the electric motor include a brushless direct current (DC) motor and a three-phase alternating current synchronous motor.

The sensor group 30 includes the recognition sensor, the vehicle state sensor, the positioning sensor, and the position sensor. Details are as described in section 1.

The control device 110 is a computer that controls the target vehicle 10T. The control device 110 includes one or more processors 101 (hereinafter, simply referred to as a processor 101) and one or more storage devices 102 (hereinafter, simply referred to as a storage device 102). The processor 101 may be referred to as processing circuitry. Circuitry is hardware programmed to implement described functions, or hardware that performs the functions. The processor 101 processes various types of information. For example, the processor 101 includes a central processing unit (CPU). The storage device 102 stores various types of information needed for processing by the processor 101. Examples of the storage device 102 include a volatile memory, a non-volatile memory, a hard disk drive (HDD), and a solid state drive (SSD). The control device 110 may include one or a plurality of electronic control units (ECUs). Functions of the battery control system 1 are implemented by cooperation between the processor 101 and the storage device 102.

The storage device 102 includes the target traveling data DTT and the battery setting information STG. The target traveling data DTT is data related to traveling of the target vehicle 10T. The battery setting information STG is information related to the setting (discharge upper limit value, fast-charge-allowable range) of the battery 20.

The communication device 140 communicates with the outside of the target vehicle 10T. For example, the communication device 140 communicates with the management apparatus 200. Information needed for each processing related to the battery control system 1 is transmitted and received via the communication device 140.

### 4-2. Management Apparatus

The management apparatus 200 includes a communication device 240 and a control device 210. The communication device 240 communicates with the target vehicle 10T and the vehicle group 10G to transmit and receive the information needed for each processing related to the battery control system 1. The control device 210 controls the management apparatus 200. The control device 210 includes one or more processors 201 (hereinafter, simply referred to as a processor 201) and one or more storage devices 202 (hereinafter, simply referred to as a storage device 202). The detailed configurations of the control device 210 and the storage device 202 are the same as those of the control device 110 and the storage device 102 on the target vehicle 10T side, respectively.

A battery control program PROG is a computer program executed by the processor 201. Functions of the control device 210 are implemented by the processor 201 executing the battery control program PROG. The battery control program PROG is stored in the storage device 202. Alternatively, the battery control program PROG may be recorded on a computer-readable recording medium. The battery control program PROG may be provided via a network.

The storage device 202 includes the target traveling data DTT acquired from the target vehicle 10T, the reference traveling data DTR acquired from the vehicle group 10G, and the battery setting information STG acquired from the target vehicle 10T.

### 4-3. Other

In the present embodiment, the management apparatus 200 executes each processing related to the battery control system 1, but in practice, the target vehicle 10T side may execute a part of each processing. For example, the target vehicle 10T may receive the reference traveling data DTR and execute the setting change processing.

## Claims

1. A battery control system applied to a battery mounted in a battery electric vehicle, the battery control system comprising:
one or more processors; and
one or more storage devices, wherein:
the one or more storage devices are configured to store reference traveling data that is traveling data related to a plurality of vehicles; and
the one or more processors are configured to
acquire target traveling data that is traveling data of the battery electric vehicle, and the reference traveling data, and
compare the target traveling data with the reference traveling data, and execute setting change processing of changing a setting related to the battery when a predetermined condition is satisfied.

2. The battery control system according to claim 1, wherein:
the one or more processors are configured to execute the setting change processing when a total weight of the battery electric vehicle is estimated to be greater than an average total weight of the vehicles; and
the setting change processing includes increasing an upper limit value of a discharge current of the battery.

3. The battery control system according to claim 1, wherein:
the one or more processors are configured to execute the setting change processing when a traveling distance of the battery electric vehicle is estimated to be greater than an average traveling distance of the vehicles; and
the setting change processing includes reducing an upper limit value of a discharge current of the battery.

4. The battery control system according to claim 1, wherein:
the one or more processors are configured to execute the setting change processing when a traveling distance of the battery electric vehicle is estimated to be greater than an average traveling distance of the vehicles; and
the setting change processing includes changing a fast-charge-allowable range of the battery electric vehicle.

5. The battery control system according to any one of claims 1 to 4, wherein the one or more processors are further configured to apply the setting related to the battery of the battery electric vehicle, the setting being changed by the setting change processing, to another vehicle of the same category as the battery electric vehicle or to another vehicle used in the same region as the battery electric vehicle.
